(19) Europäisches Patentamt
European Patent Office
Office européen des brevets

(11) **EP 4 411 595 B1**

(12) **EUROPEAN PATENT SPECIFICATION**

(45) Date of publication and mention
of the grant of the patent:
**31.12.2025 Bulletin 2026/01**

(21) Application number: **24153677.0**

(22) Date of filing: **24.01.2024**

(51) International Patent Classification (IPC):
**G06N 3/048** (2023.01)     **G06N 3/0495** (2023.01)
**G06N 3/0464** (2023.01)     **G06N 3/0442** (2023.01)

(52) Cooperative Patent Classification (CPC):
**G06N 3/0495; G06N 3/048;** G06N 3/0442;
G06N 3/0464

(54) **METHOD AND SYSTEM FOR NEURAL NETWORK INFERENCING IN LOGARITHMIC DOMAIN**

VERFAHREN UND SYSTEM ZUR ABLEITUNG EINES NEURONALEN NETZWERKS IN EINER LOGARITHMISCHEN DOMÄNE

PROCÉDÉ ET SYSTÈME D'INFÉRENCE DE RÉSEAU NEURONAL DANS UN DOMAINE LOGARITHMIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **06.02.2023 IN 202321007570**

(43) Date of publication of application:
**07.08.2024 Bulletin 2024/32**

(73) Proprietor: **Tata Consultancy Services Limited Mumbai, Maharashtra 400 021 (IN)**

(72) Inventors:
• **BHOWMICK, Archisman**
**400 607 Thane West - Maharashtra (IN)**
• **MISHRA, Mayank**
**400 607 Thane West - Maharashtra (IN)**
• **SINGHAL, Rekha**
**400 607 Thane West - Maharashtra (IN)**
• **RATHORE, Aditya Singh**
**341302 Nagaur - Rajasthan (IN)**

(74) Representative: **Goddar, Heinz J. et al**
**Boehmert & Boehmert**
**Anwaltspartnerschaft mbB**
**Pettenkoferstrasse 22**
**80336 München (DE)**

(56) References cited:
• **CHRIST MAXIME ET AL: "Low-precision logarithmic arithmetic for neural network accelerators", 2022 IEEE 33RD INTERNATIONAL CONFERENCE ON APPLICATION-SPECIFIC SYSTEMS, ARCHITECTURES AND PROCESSORS (ASAP), IEEE, 12 July 2022 (2022-07-12), pages 72 - 79, XP034209120, DOI: 10.1109/ASAP54787.2022.00021**
• **ARNAB SANYAL ET AL: "Neural Network Training with Approximate Logarithmic Computations", ARXIV.ORG, CORNELL UNIVERSITY LIBRARY, 201 OLIN LIBRARY CORNELL UNIVERSITY ITHACA, NY 14853, 22 October 2019 (2019-10-22), XP081518959**
• **KOURETAS I ET AL: "Logarithmic number system for deep learning", 2018 7TH INTERNATIONAL CONFERENCE ON MODERN CIRCUITS AND SYSTEMS TECHNOLOGIES (MOCAST), IEEE, 7 May 2018 (2018-05-07), pages 1 - 4, XP033356516, DOI: 10.1109/ MOCAST.2018.8376572**

**Description**

The CROSS-REFERENCE TO RELATED APPLICATIONS AND PRIORITY

The present application claims priority to Indian application no. 202321007570, filed on February 06, 2023.

TECHNICAL FIELD

The disclosure herein generally relates to neural network inferencing, and, more particularly, to a method and system for neural network inferencing in logarithmic domain.

BACKGROUND

In recent years, neural networks (NNs) like deep neural networks, convolutional neural networks and so on have been used in a range of cognitive applications, such as natural language processing and image recognition. Increasing dataset, model size and the desire to run DNNs on resource constrained edge devices have motivated researchers to optimize their hardware implementation. The DNN computation involves multiply-accumulate (MAC) operations. Since the multiplier circuitry dominates the complexity of MAC, several techniques have been proposed to optimize the multiplication operations in the MAC units.

It is known that multiplication operation in the real domain transforms into addition operation in the logarithm domain. Since addition operation incurs lower overhead than multiplication, several methods have used a logarithmic domain number system (LNS) for optimizing inference of neural networks. The logarithmic domain gives a larger range for small real domain magnitude numbers, which is the case for deep learning model parameters. Using a logarithm number system also avoids the problems inherent in the residue number system (RNS).

Prior methods propose training the neural network model in the logarithmic domain. However, training the model in the logarithmic domain is challenging due to the complexity of the training process (especially for largescale models) and the need for high accuracy. Further, training a model in the logarithmic domain may make it challenging to apply post-training optimization techniques provided by deep learning frameworks such as pruning and quantization. Further performing both training and inferencing in logarithmic domain has several problems like unable to convert large scale models, less accuracy, unable to perform quantization and so on. Also, methods performing training in logarithmic domain can convert a limited number of layers and activation functions in the model. Document CHRIST MAXIME ET AL: "Low-precision logarithmic arithmetic for neural network accelerators" : discloses low-precision logarithmic number system (LNS). Firstly, LNS has more dynamic than fixed-point for the same number of bits. Thus, when quantizing MNIST and CIFAR reference networks without retraining, the smallest format size achieving top-1 accuracy comparable to floating-point is 1 to 3 bits smaller with LNS than with fixed-point. In addition, it is shown that the zero bit of classical LNS is not needed in this context, and that the sign bit can be saved for activations. Secondly, low-precision LNS enables efficient inference architectures where 1/ multiplications reduce to additions; 2/ the weighted inputs are converted to classical linear domain, but the tables needed for this conversion remain very small thanks to the low precision; and 3/ the conversion of the output activation back to LNS can be merged with an arbitrary activation function. The proposed LNS neuron is detailed and its implementation on FPGA is shown to be smaller and faster than a fixed-point one for comparable accuracy.

SUMMARY

Embodiments of the present disclosure present technological improvements as solutions to one or more of the above-mentioned technical problems recognized by the inventors in conventional systems. The invention is set out in appended set of claims.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a system for neural network inferencing in logarithmic domain according to some embodiments of the present disclosure.
FIG. 2 is a schematic diagram depicting broad-level process flow of neural network inferencing in logarithmic domain according to some embodiments of the present disclosure.

FIG. 3A and FIG. 3B is an exemplary flow diagram of a method for neural network inferencing in logarithmic domain in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

In Artificial Intelligence (AI) multiplications are responsible for a significant overhead in hardware accelerators. Since multiplications in the real domain transform into addition in the logarithmic domain, logarithmic number system (LNS) is used for inference. Since the log value of a negative number and zero is undefined, conventional techniques need to store the magnitude, sign and iszero flag separately as three separate variables. LNS of a real number x is represented by the logarithm of its absolute values (the *magnitude*), its *sign* and a flag called *iszero,* which notifies whether the real number is zero. Such an approach may lead to a larger memory.

The embodiments of the present disclosure, provides a method for neural network inferencing in logarithmic domain. In the context of the present disclosure, the expressions 'neural network (NN)' and 'model' may be used interchangeably. The disclosed method works for neural networks trained in real domain. The embodiments of the present disclosure, converts a trained model to logarithmic domain after it is pruned or undergone another optimization. The method provides a bit manipulation based logarithm number system technique for storing logarithmic numbers of real numbers. The disclosed method is complementary to other NN complexity reduction techniques, such as pruning. The range of parameter values are known once the model is trained. Based on this, the number of bits needed to represent them in the logarithmic domain can be configured and the disclosed method utilizes a 32-bit integer variable for storing the logarithm number of a real number. This enables instance optimized deployment of the model on edge devices.

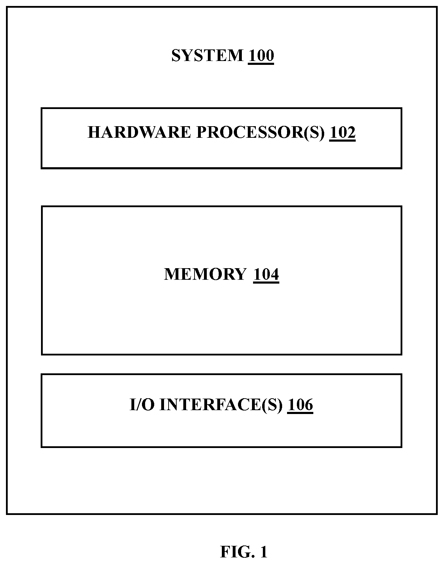

Referring now to the drawings, and more particularly to FIG. 1 through FIG. 3B, where similar reference characters denote corresponding features consistently throughout the figures, there are shown preferred embodiments and these embodiments are described in the context of the following exemplary system and/or method.

FIG. 1 illustrates an exemplary block diagram of a system 100 for neural network inferencing in logarithmic domain according to some embodiments of the present disclosure. In an embodiment, the system 100 includes one or more hardware processors 102, communication interface(s) or input/output (I/O) interface(s) 106, and one or more data storage devices or memory 104 operatively coupled to the one or more processors 102. The one or more hardware processors 102 that are hardware processors can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In the context of the present disclosure, the expressions 'processors' and 'hardware processors' may be used interchangeably. In an embodiment, the system 100 can be implemented in a variety of computing systems, such as laptop computers, notebooks, hand-held devices, workstations, mainframe computers, servers, a network cloud and the like.

The I/O interface (s) 106 may include a variety of software and hardware interfaces, for example, a web interface, a graphical user interface, and the like and can facilitate multiple communications within a wide variety of networks and protocol types, including wired networks, for example, LAN, cable, etc., and wireless networks, such as WLAN, cellular, or satellite. In an embodiment, the I/O interface(s) can include one or more ports for connecting a number of devices to one another or to another server.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

In an embodiment, the memory 104 includes a plurality of modules such as the pre-trained NN, the logarithmic NN model and so on (not shown). The plurality of modules includes programs or coded instructions that supplement applications or functions performed by the system 100 for executing different steps involved in the process of NN inferencing being performed by the system 100. The plurality of modules, amongst other things, can include routines, programs, objects, components, and data structures, which performs particular tasks or implement particular abstract data types. The plurality of modules may also be used as, signal processor(s), node machine(s), logic circuitries, and/or any other device or component that manipulates signals based on operational instructions. Further, the plurality of modules can be used by hardware, by computer-readable instructions executed by the one or more hardware processors 102, or by a combination thereof. The plurality of modules can include various sub-modules (not shown).

Further, the memory 104 may include a database or repository which may store the pre-trained NN. The memory 104 may comprise information pertaining to input(s)/output(s) of each step performed by the processor(s) 102 of the system 100 and methods of the present disclosure. In an embodiment, the database may be external (not shown) to the system 100 and coupled via the I/O interface 106.

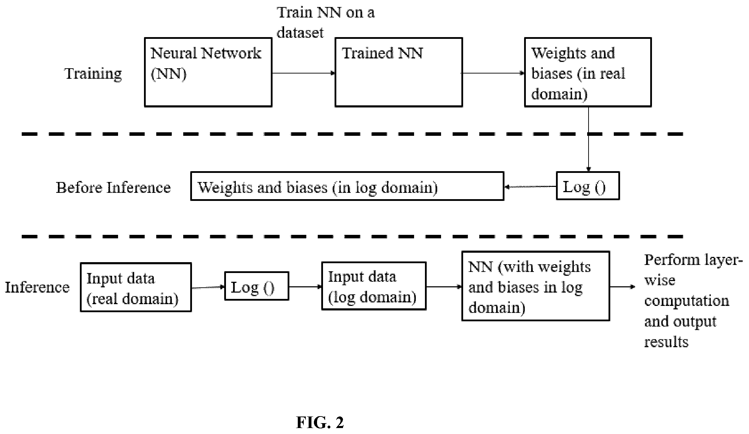

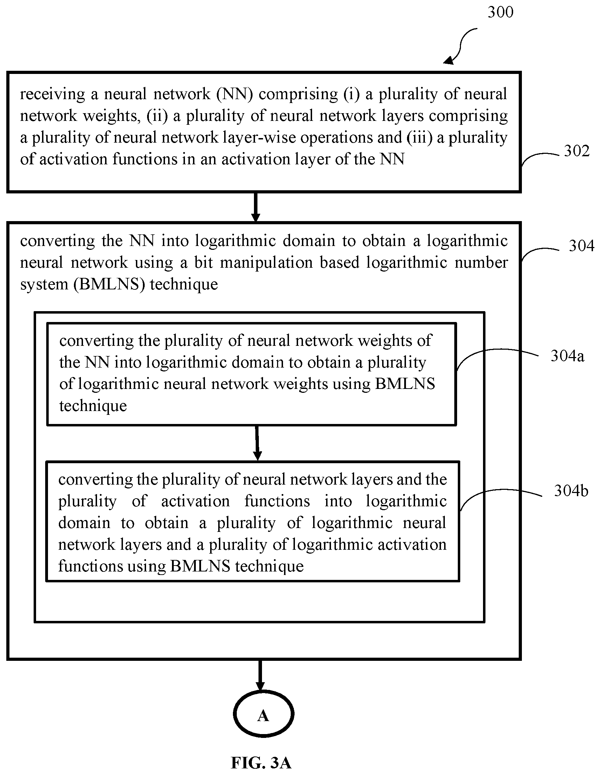

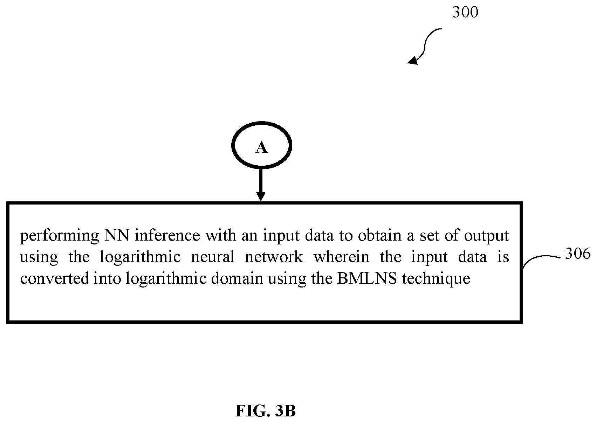

FIG. 2 is a schematic diagram depicting broad-level process flow of neural network inferencing in logarithmic domain according to some embodiments of the present disclosure. As depicted in the figure, the process flow includes three phases, training, before inference and inference phases. In the training phase, a NN is trained utilizing a dataset in real domain to obtain a trained NN. The NN is trained in real domain to obtain weights and biases of the trained NN in real domain. Further in before inference phase, the trained NN is converted into logarithmic domain to obtain a logarithmic NN model by converting the weights and biases of the trained NN in real domain into logarithmic domain using a Bit Manipulation based Logarithmic Number System (BMLNS) technique. Thereafter, in the inference phase, the logarithmic NN model is used for inferencing. Here, an input data in real domain which is used for inferencing is first converted into logarithmic domain. The logarithmic input data is provided to the logarithmic NN model for inferencing to obtain output. FIG. 2 will be explained in detail in conjunction with the flow diagram depicted in FIGS. 3A and 3B.

FIG. 3A through FIG. 3B is an exemplary flow diagram of a method 300 for neural network inferencing in logarithmic domain in accordance with some embodiments of the present disclosure.

In an embodiment, the system 100 comprises one or more data storage devices or the memory 104 operatively coupled to the one or more hardware processor(s) 102 and is configured to store instructions for execution of steps of the method 300 by the processor(s) or one or more hardware processors 102. The steps of the method 300 of the present disclosure will now be explained with reference to the components or blocks of the system 100 as depicted in FIG. 1 and the steps of flow diagram as depicted in FIGS. 3A and 3B. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

At step 302 of the method 300, the one or more hardware processors 102 are configured to receive a NN. The NN is a pre-trained model which is pre-trained in real domain. The NN comprises (i) a plurality of neural network weights, (ii) a plurality of neural network layers comprising a plurality of neural network layer-wise operations and (iii) a plurality of activation functions in an activation layer of the NN. The plurality of neural network weights, the plurality of neural network layers and the activation functions may be in real domain or logarithmic domain. These are in real domain, if the NN is pre-trained in real domain else in logarithmic domain otherwise. The plurality of neural network layers includes but not limited to an input layer, a dense layer, a convolution layer, a max-pooling layer, a batch normalization layer, an activation layer, a Long Short Term Memory (LSTM) layer. The plurality of activation functions includes but not limited to an argmax function, a Rectified Linear Unit (ReLU) function, a sigmoid and a tanh function. The neural network considered in the disclosed method includes but not limited to a deep neural network, a convolutional neural network and a deep convolutional network.

At step 304 of the method 300, the one or more hardware processors 102 are configured to convert the NN into logarithmic domain to obtain a logarithmic neural network using a Bit Manipulation based Logarithmic Number System (BMLNS) technique. The conversion of the NN into logarithmic NN is explained using steps 304a and 304b. At step 304a, the plurality of neural network weights of the NN is converted into logarithmic domain to obtain a plurality of logarithmic neural network weights using BMLNS technique. At step 304b, the plurality of neural network layers and the plurality of activation functions is converted into logarithmic domain to obtain a plurality of logarithmic neural network layers and a plurality of logarithmic activation functions using BMLNS technique. Using the BMLNS technique the three values of a logarithm number, the *magnitude, sign* and *iszero,* are stored in a single 32-bit integer variable.

For a real number x, let the corresponding number in BMLNS technique be given as *BMLNS(x).* For computing, *BMLNS(x),* initially two intermediate values such as *mag* and *number* are computed. The values *mag* and *number* are represented as equations 1 and 2 respectively,

$$mag = \log(|x|) \tag{1}$$

$$number = ((int(|mag| \times 2^n) \times 2 + sign) \times 2 + iszero) \tag{2}$$

where, *sign* denotes sign of the real number, *iszero* denotes the real number is zero or otherwise, *mag* is the magnitude of the logarithmic number system representation of the real number and n is a positive integer decided on real time based on the granularity and distribution of neural network weights of the pre-trained NN. For different neural networks, the value of *n* can be different. For example, for LeNet, *n* = 10 works fine, but in the case of Visual Geometry Group 16 (VGG16), *n* = 20 is used since the distribution of weights and biases is more granular in VGG16.

Finally, *BMLNS(x)* is computed using equation 3 given below,

$$BMLNS = \begin{cases} number, & if\ mag \geq 0 \\ -(number), & otherwise \end{cases} \qquad (3)$$

The least significant bit (LSB) of the single 32-bit integer denotes that the real number is zero or a non-zero number. The bit before the LSB denotes the sign of the real number and remaining bits denotes integer value of magnitude of logarithm function of the real number. However, in general BMLNS technique can also transform a real number to its logarithmic representation by storing it in an n-bit integer by manipulating the bits required to store magnitude (for example, bit-masking or any other bit-manipulation techniques can be used), where n can be any positive integer greater than 3. In this representation one bit is reserved for the *iszero* value, one bit is reserved for *sign* and the remaining n-2 bits are reserved for the magnitude part. Table 1 illustrates working of BMLNS for some sample numbers.

**Table 1**

| *x* | *mag* = log(\|*x*\|) | BMLNS computations | | | | |
|---|---|---|---|---|---|---|
| | | *k1* = *int*(\|*mag*\| $\times$ $2^n$) | *k2* = *k1* \* 2 | *k3* = *k2* + *sign* | *Number* = (*k3* \* 2) + *iszero* | BMLNS |
| -0.198676 | -1.61608 | 1654 | 3308 | 3309 | 6618 | -6618 |
| 2.0471 | 0.716424 | 733 | 1466 | 1466 | 2932 | 2932 |
| 0.172651 | -1.756482 | 1798 | 3596 | 3596 | 7192 | -7192 |
| 10.914072 | 2.390053 | 2447 | 4894 | 4894 | 9788 | 9788 |

The three values, the *magnitude, sign* and *iszero* can be computed back using the *BMLNS* value using equations 4,5,6 as given below,

$$magnitude = (BMLNS) \div (2^n \times 2 \times 2) \qquad (4)$$

$$sign = \big((|BMLNS| \gg 1)\&1\big) \qquad (5)$$

$$iszero = (BMLNS)\&1 \qquad (6)$$

BMLNS reduces the storage overhead. The conversion operations in both directions (converting a real number to BMLNS and vice-versa) use multiplication/division by power-of-two, which can be implemented simply by bit-shifting operations. In the case of floating-point numbers, multiplying or dividing by powers of 2, the power is added or subtracted from the exponent term of the floating-point number.

In the BMLNS technique, the different layers and activation function of the NN model are converted into logarithmic domain. The conversion of each layer is explained hereafter. In the first layer, called the input layer, the input, weight and bias matrices are converted to the logarithmic domain by converting each matrix element to 32-bit integer using the BMLNS technique. During inference, the computation of a layer produces outputs in the logarithmic domain. Thus, the input, weights, and biases are all in the logarithmic domain for the subsequent layers.

In the dense layer, the *input * weight + bias* operation is performed. Here, only multiplication and addition operations are converted from the real domain to the logarithmic domain. Similarly, only addition and multiplication must be converted to the Logarithm Number System (LNS) domain in the convolution layer. The pseudo code below shows the implementation details of a dense layer conversion, void LNS_DenseLayer(int *A, int *W, int *answer, int *bias){

```
int i, j, k;
for(i=0;i<x;i++){
        for (j=0;j<y;j++){
                int i1=LNS_multiplication(A[i],W[j]);
                for (k=1;k<z;k++) {
                        int i2= LNS_multiplication(A[k+i*z], W[j+k*y] );
                        i1=addition_log(i1,i2);
                }
                answer[j+i*y]=LNS_addition(i1,bias[j]);
        }
    }
}
```

Max-pooling layer performs comparison operations. Hence, the comparison operation in the log domain has been implemented by comparing the magnitude in the log domain. The pseudo code below shows this implementation, int comparison(int n1,int n2)

```
{
        float mag1= magnitude(n1);
        float mag2= magnitude(n2);
        int s1=sign(n1);
        int s2=sign(n2);
        if(s1==1)
        mag1= -(mag1);
        if(s2==1)
        mag2= -(mag2);
        return (mag1>=mag2)? n1:n2;
}
```

Normalization transforms the data to have a mean zero and a standard deviation one. Like other layers, four matrices from the pre-trained model are extracted for the batch normalization layer: gamma, beta, moving mean and moving variance. After converting all these matrices to the logarithmic domain, two equations below are computed,

$$h_{i(norm)} = \frac{(h_i - \mu)}{\sigma + \epsilon} \qquad (7)$$

$$h = \gamma h_{i(norm)} + \beta \qquad (8)$$

$\gamma$ and $\beta$ are used for re-scaling and shifting, $\mu$ is the mean and $\sigma$ is the standard deviation. In this layer, all four basic mathematical computations in the logarithmic domain, i.e., addition, multiplication, division, and subtraction are performed in the logarithmic domain.

In the activation layer, activation functions including but not limited to argmax, Rectified Linear Unit (ReLU), sigmoid and tanh are converted. In the argmax function, the comparison operator in the logarithmic domain was used to get the position of the highest number. As ReLU is a piece-wise linear function, it was converted it to the logarithmic domain by using the sign attribute of a log number. The pseudo code below shows the conversion in ReLU layer,
int LNS_ReLU(int log_number)

$$\{$$

$$\text{if sign(log\_number)==1}$$

$$\text{//For negative number,}$$

$$\text{ReLU outputs 0}$$

$$\text{return LOG(0)}$$

$$\text{else}$$

$$\text{return log\_number}$$

$$\}$$

Since sigmoid and tanh are non-linear functions, converting them to the logarithmic domain is not straightforward. To implement them in the logarithmic domain, lookup tables (LUT) are used. For the keys of the LUT, a range of numbers are selected based on the range and granularity of the distribution of weights and biases. Table 2 shows LUT with range (-M, M) and least-count of $\varepsilon$. $\mathcal{F}$ is sigmoid or tanh. For example, the range is selected as (5,5) and granularity as 0.0001. For each key, the sigmoid or tanh function of that key is first computed. Then, log(key) and log(value) as the key and value are stored in the LUT as shown in Table 3. To search an element in the LUT, its log is computed and then a binary search operation is performed to get the nearest key from LUT. The corresponding value is returned as logarithmic of sigmoid/tanh function of the searched element.

**Table 2**

| Key | Value |
|---|---|
| -M | $\mathcal{F}$ (-M) |
| -M+ $\varepsilon$ | $\mathcal{F}$ (-M+$\varepsilon$) |
| -M+2 $\varepsilon$ | $\mathcal{F}$ (-M+2$\varepsilon$) |
| ... | ... |
| M-$\varepsilon$ | $\mathcal{F}$ (M- $\varepsilon$) |
| M | $\mathcal{F}$ (M) |

**Table 3**

| Key' | Value' |
|---|---|
| log (-M) | log($\mathcal{F}$ (-M)) |
| log (-M+$\varepsilon$) | log ($\mathcal{F}$ (-M+ $\varepsilon$)) |
| log (-M+2 $\varepsilon$) | log ($\mathcal{F}$ (-M+2 $\varepsilon$)) |
| ... | ... |
| log (M-$\varepsilon$) | log ($\mathcal{F}$ (M- $\varepsilon$)) |
| log (M) | log ($\mathcal{F}$ (M)) |

A basic LSTM layer is converted into the logarithmic domain. An LSTM cell has four gates: input modulation gate, input gate, forget gate and output gate. For the LSTM layer, apart from input, weights and biases, the previous cell and hidden states are converted to the logarithmic domain. The core computation of each gate is similar to that of the dense layer, namely, $A * W + b$. Hence, the multiplication and addition operations are converted into the logarithmic domain.

At step 306 of the method 300, the one or more hardware processors 102 are configured to perform NN inference with an input data to obtain a set of output using the logarithmic neural network. The input data is converted into logarithmic domain using the BMLNS technique. The set of output data is in logarithmic domain. However, it may be converted back to real domain with respect to the neural network application. In an embodiment not falling under the scope of the claims, if the NN is pre-trained in logarithmic domain, the NN is performed inferencing without performing the steps under 304. The NN inferencing is performed by converting the neural network layer-wise operations using the input data which is converted into logarithmic domain.

**EXPERIMENTAL RESULTS:** The disclosed method was implemented in several networks, from both computer vision and natural language processing, and both small and large in the logarithmic domain. The software used are Python 3.6.9, Keras. Few networks used for implementation are multi-layer perceptron (MLP), LeNet network, VGG16 network, Residual Network 50 (ResNet50) network, LSTM network.

> **Multi-layer perceptron (MLP):** An MLP model is trained on the MNIST dataset. For logarithmic domain inference, a dense layer only is needed to implement in the logarithmic domain. It was observed that the results in the real domain match 100% with those obtained in the logarithmic domain.
>
> **LeNet network:** The LeNet network is trained on the MNIST dataset. The network has three layers: 2d convolution layer (Conv2d), maxpool and dense layers, which were implemented in the logarithmic domain. The logarithmic domain accuracy results were found to match 100% with those obtained in the real domain.
>
> **VGG16 network:** The VGG16 network is trained on the ImageNet dataset. VGG16 has a combination of 3 layers, namely, 2d-convolution, max-pooling and dense layers. 10, 000 test images were evaluated from ImageNet using VGG16 in the real and log domains. With real domain implementation, the accuracy is found to be around 91.4%. With logarithmic domain implementation, the accuracy is found to be around 91.2%. Upon comparing 10000 results predicted by the real domain and log domain VGG16, it is observed that 26 different results and the rest are the same. The difference arises from the fact that VGG16 is a deep network, and even minor approximations due to the limited storage capacity of computers can change output activations of intermediate layers. Since the ImageNet dataset has 1000 classes, even a negligible difference in the activations of the last few layers can change the final prediction. However, the difference in accuracy is negligible.
>
> **ResNet50 network:** ResNet50 is trained on the sign language digits dataset, which has 6 classes. ResNet50 combines four layers: Conv2d, batch-normalization, ReLU activation and dense layer. These layers were converted into the logarithmic domain. The inference results in the logarithmic domain were found to match 100% with those in the real domain.
>
> **LSTM network:** A basic LSTM model is taken consisting of an LSTM cell and a dense layer trained on time-series data. It was implemented in the logarithmic domain and was observed that its results match 100% with those obtained.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiment of present disclosure herein provides a method for NN inferencing in logarithmic domain. The method uses logarithm domain, which mitigate the multiplication bottleneck in the inference part of deep learning model. The embodiment thus provides a bit manipulation based logarithm number system technique for converting a pre-trained NN into logarithmic domain wherein the NN is pre-trained in real domain. The embodiments of the disclosed method converts the neural network weights, neural network layers and activation function of the pre-trained NN into logarithmic domain using the BMLNS technique. The method uses a 32-bit integer variable to store the three variables of a logarithm number, magnitude, sign and iszero which increases memory efficiency of the disclosed method as compared to the conventional techniques.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1.    A processor implemented method (300) comprising:

receiving (302), via one or more hardware processors (102), a pre-trained neural network, NN, model, wherein the NN is pre-trained in a real domain, wherein the NN comprising (i) a plurality of neural network weights, (ii) a plurality of neural network layers comprising a plurality of neural network layer-wise operations and (iii) a plurality of activation functions in an activation layer of the NN;

converting (304), via the one or more hardware processors (102), the NN into a logarithmic domain to obtain a logarithmic neural network using a Bit Manipulation based Logarithmic Number System, BMLNS, technique, wherein the step of converting comprises,

converting (304a) the plurality of neural network weights of the NN into the logarithmic domain to obtain a plurality of logarithmic neural network weights using the BMLNS technique;

converting (304b) the plurality of neural network layers and the plurality of activation functions into the logarithmic domain to obtain a plurality of logarithmic neural network layers and a plurality of logarithmic activation functions using the BMLNS technique, wherein the BMLNS technique on a real number(x) is denoted by:

computing two or more intermediate values, wherein the two or more intermediate values are represented by:

$$mag = \log(|x|)$$

$$number = ((int(|mag| \times 2^n) \times 2 + sign) \times 2 + iszero)$$

$$BMLNS = \begin{cases} number, & if\ mag \geq 0 \\ -(number), & otherwise \end{cases},$$

wherein *sign* denotes sign of the real number, *iszero* denotes the real number is zero or otherwise, *mag* is the magnitude of a logarithmic number system representation of the real number and n is a positive integer which is decided in real time based on granularity and distribution of the plurality of neural network weights of the pre-trained NN model, wherein values of a logarithm number, the *magnitude, sign* and *iszero* are stored in a single 32-bit integer variable using the bit manipulation based logarithmic number system; and

performing (306), via the one or more hardware processors (102), a NN inference with an input data to obtain a set of output using the logarithmic neural network wherein the input data is converted into the logarithmic domain using the BMLNS technique, wherein the NN inferencing is performed by converting the neural network layer-wise operations using the input data which is converted into the logarithmic domain, wherein the conversion comprises:

converting the input data, weight and bias matrices of a first layer into the logarithmic domain by converting each matrix element to the 32-bit integer variable.

2. The method (300) as claimed in claim 1, wherein the single 32-bit integer of the real number comprises,

a least significant bit, LSB, denoting the real number is zero or a non-zero number;
a bit before LSB denoting sign of the real number; and
remaining bits denoting integer value of magnitude of logarithm function of the real number.

3. The method (300) as claimed in claim 1, wherein

the plurality of neural network layers includes an input layer, a dense layer, a convolution layer, a max-pooling layer, a batch normalization layer, an activation layer and a Long Short Term Memory, LSTM, layer, and
the plurality of activation functions includes an argmax function, a Rectified Linear Unit, ReLU, function, a sigmoid and a tanh function.

4. A system (100), comprising:

a memory (104) storing instructions;
one or more communication interfaces (106); and
one or more hardware processors (102) coupled to the memory (104) via the one or more communication interfaces (106), wherein the one or more hardware processors (102) are configured by the instructions to:

receive a pre-trained neural network, NN, model, wherein the NN is pre-trained in a real domain, wherein the NN comprising (i) a plurality of neural network weights, (ii) a plurality of neural network layers comprising a plurality of neural network layer-wise operations and (iii) a plurality of activation functions in an activation layer of the NN;
convert the NN into a logarithmic domain to obtain a logarithmic neural network using a Bit Manipulation based Logarithmic Number System, BMLNS, technique wherein the step of converting comprises,

converting the plurality of neural network weights of the NN into the logarithmic domain to obtain a plurality of logarithmic neural network weights using BMLNS technique;
converting the plurality of neural network layers and the plurality of activation functions into the logarithmic domain to obtain a plurality of logarithmic neural network layers and a plurality of logarithmic activation functions using BMLNS technique, wherein the BMLNS technique on a real number(x) is denoted by:

computing two or more intermediate values, wherein the two or more intermediate values are represented by:

$$mag = \log(|x|)$$

$$number = ((int(|mag| \times 2^n) \times 2 + sign) \times 2 + iszero)$$

$$BMLNS = \begin{cases} number, & if\ mag \geq 0 \\ -(number), & otherwise \end{cases}$$

wherein *sign* denotes sign of the real number, *iszero* denotes the real number is zero or otherwise, *mag* is the magnitude of a logarithmic number system representation of the real number and n is a positive integer which is decided in real time based on granularity and distribution of the plurality of neural network weights of the pre-trained NN model, wherein values of a logarithm number, the *magnitude, sign* and *iszero* are stored in a single 32-bit integer variable using the bit manipulation based logarithmic number system;
and
perform a NN inference with an input data to obtain a set of output using the logarithmic neural network wherein the input data is converted into the logarithmic domain using the BMLNS technique, wherein the NN inferencing is performed by converting the neural network layer-wise operations using the input data which is converted into the logarithmic domain, wherein the conversion comprises:
converting the input data, weight and bias matrices of a first layer into the logarithmic domain by converting each matrix element to the 32-bit integer variable.

5. The system (100) as claimed in claim 4, wherein the single 32-bit integer of the real number comprises,

a least significant bit, LSB, denoting the real number is zero or a non-zero number;
a bit before LSB denoting sign of the real number; and
remaining bits denoting integer value of magnitude of logarithm function of the real number.

6. The system (100) as claimed in claim 4, wherein

the plurality of neural network layers includes an input layer, a dense layer, a convolution layer, a max-pooling layer, a batch normalization layer, an activation layer and a Long Short Term Memory, LSTM, layer, and
the plurality of activation functions includes an argmax function, a Rectified Linear Unit, ReLU, function, a sigmoid and a tanh function.

7. One or more non-transitory machine-readable information storage mediums comprising one or more instructions which when executed by one or more hardware processors cause:

receiving, a pre-trained neural network, NN, model, wherein the NN is pre-trained in a real domain, wherein the NN further comprising (i) a plurality of neural network weights, (ii) a plurality of neural network layers comprising a plurality of neural network layer-wise operations and (iii) a plurality of activation functions in an activation layer of the NN;
converting, the NN into a logarithmic domain to obtain a logarithmic neural network using a Bit Manipulation based Logarithmic Number System, BMLNS, technique wherein the step of converting comprises,

converting the plurality of neural network weights of the NN into the logarithmic domain to obtain a plurality of logarithmic neural network weights using the BMLNS technique;
converting the plurality of neural network layers and the plurality of activation functions into the logarithmic domain to obtain a plurality of logarithmic neural network layers and a plurality of logarithmic activation functions using the BMLNS technique, wherein the BMLNS technique on a real number(x) is denoted by:

computing two or more intermediate values, wherein the two or more intermediate values are represented by:

$$mag = \log(|x|)$$

$$number = ((int(|mag| \times 2^n) \times 2 + sign) \times 2 + iszero)$$

$$BMLNS = \begin{cases} number, & if\ mag \geq 0 \\ -(number), & otherwise \end{cases}$$

wherein *sign* denotes sign of the real number, *iszero* denotes the real number is zero or otherwise, *mag* is the magnitude of a logarithmic number system representation of the real number and n is a positive integer which is decided in real time based on granularity and distribution of the plurality of neural network weights of the pre-trained NN model, wherein values of a logarithm number, the *magnitude, sign* and *iszero* are stored in a single 32-bit integer variable using the bit manipulation based logarithmic number system; and

performing a NN inference with an input data to obtain a set of output using the logarithmic neural network wherein the input data is converted into the logarithmic domain using the BMLNS technique, wherein the NN inferencing is performed by converting the neural network layer-wise operations using the input data which is converted into the logarithmic domain, wherein the conversion comprises:
converting the input data, weight and bias matrices of a first layer into the logarithmic domain by converting each matrix element to the 32-bit integer variable.

**Patentansprüche**

1. Prozessorimplementiertes Verfahren (300), umfassend:

Empfangen (302), über einen oder mehrere Hardwareprozessoren (102), eines vortrainierten neuronalen Netzwerk-, NN-, Modells, wobei das NN in einer realen Domäne vortrainiert ist, wobei das NN (i) eine Mehrzahl von neuronalen Netzwerkgewichten, (ii) eine Mehrzahl von neuronalen Netzwerkschichten, die eine Mehrzahl von schichtweisen neuronalen Netzwerkoperationen umfassen, und (iii) eine Mehrzahl von Aktivierungsfunktionen in einer Aktivierungsschicht des NN umfasst;
Umwandeln (304), über den einen oder die mehreren Hardwareprozessoren (102), des NN in eine logarithmische Domäne, um ein logarithmisches neuronales Netzwerk unter Verwendung einer auf Bitmanipulation basierenden logarithmischen Zahlensystem- (Bit Manipulation based Logarithmic Number System), BMLNS-, Technik zu erhalten,
wobei der Schritt des Umwandelns umfasst,

Umwandeln (304a) der Mehrzahl von neuronalen Netzwerkgewichten des NN in die logarithmische Domäne, um eine Mehrzahl von logarithmischen neuronalen Netzwerkgewichten unter Verwendung der BMLNS-Technik zu erhalten;
Umwandeln (304b) der Mehrzahl von neuronalen Netzwerkschichten und der Mehrzahl von Aktivierungsfunktionen in die logarithmische Domäne, um eine Mehrzahl von logarithmischen neuronalen Netzwerkschichten und eine Mehrzahl von logarithmischen Aktivierungsfunktionen unter Verwendung der BMLNS-Technik zu erhalten, wobei die BMLNS-Technik an einer realen Zahl(x) bezeichnet wird durch:

Berechnen von zwei oder mehr Zwischenwerten, wobei die zwei oder mehr Zwischenwerte dargestellt werden durch:

$$mag = \log(|x|)$$

$$Nummer = ((int(|mag| \times 2^n) \times 2 + Zeichen) \times 2 + istNull)$$

$$BMLNS = \begin{cases} Nummer, & wenn\ mag \geq 0 \\ -(Nummer), & ansonsten \end{cases}$$

wobei *Zeichen* das Vorzeichen der realen Zahl bezeichnet, *istNull* bezeichnet, dass die reale Zahl Null oder anders ist, *mag* die Größe einer logarithmischen Zahlensystemdarstellung der realen Zahl ist und n eine positive ganze Zahl ist, die in Echtzeit basierend auf der Granularität und Verteilung der Mehrzahl von neuronalen Netzwerkgewichten des vortrainierten NN-Modells entschieden wird, wobei Werte einer logarithmischen Zahl, der *Größe,* des *Vorzeichens* und von *istNull* in einer einzelnen ganzzahligen 32-Bit-Variablen unter Verwendung des auf Bitmanipulation basierenden logarithmischen Zahlensystems gespeichert werden;

und

Durchführen (306), über den einen oder die mehreren Hardwareprozessoren (102), einer NN-Inferenz mit Eingabedaten, um einen Satz von Ausgaben unter Verwendung des logarithmischen neuronalen Netzwerks zu erhalten, wobei die Eingabedaten unter Verwendung der BMLNS-Technik in die logarithmische Domäne umgewandelt werden, wobei die NN-Inferenz durch Umwandeln der schichtweisen Operationen des neuronalen Netzwerks unter Verwendung der Eingabedaten, die in die logarithmische Domäne umgewandelt werden, durchgeführt wird, wobei die Umwandlung umfasst:

Umwandeln der Eingabedaten, des Gewichts und der Bias-Matrizen einer ersten Schicht in die logarithmische Domäne durch Umwandeln jedes Matrixelements in die ganzzahlige 32-Bit-Variable.

2. Verfahren (300) nach Anspruch 1, wobei die einzelne ganzzahlige 32-Bit-Variable der realen Zahl umfasst,

ein niedrigstwertiges Bit (Least Significant Bit), LSB, das bezeichnet, dass die reale Zahl Null oder eine von Null verschiedene Zahl ist;

ein Bit vor LSB, das das Vorzeichen der realen Zahl bezeichnet; und

verbleibende Bits, die den ganzzahligen Wert der Größe der Logarithmusfunktion der realen Zahl bezeichnen.

3. Verfahren (300) nach Anspruch 1, wobei

die Mehrzahl von neuronalen Netzwerkschichten eine Eingabeschicht, eine dichte Schicht, eine Faltungsschicht, eine Max-Pooling-Schicht, eine Stapelnormalisierungsschicht, eine Aktivierungsschicht und eine Long-Short-Term-Memory-, LSTM-, Schicht umfasst, und

die Mehrzahl von Aktivierungsfunktionen eine argmax-Funktion, eine Rectified-Linear-Unit-, ReLU-, Funktion, eine Sigmoid- und eine tanh-Funktion umfasst.

4. System (100), umfassend:

einen Speicher (104), der Anweisungen speichert;

eine oder mehrere Kommunikationsschnittstellen (106); und

einen oder mehrere Hardwareprozessoren (102), die über die eine oder die mehreren Kommunikationsschnittstellen (106) mit dem Speicher (104) gekoppelt sind, wobei der eine oder die mehreren Hardwareprozessoren (102) durch die Anweisungen konfiguriert sind zum:

Empfangen eines vortrainierten neuronalen Netzwerk-, NN-, Modells, wobei das NN in einer realen Domäne vortrainiert ist, wobei das NN (i) eine Mehrzahl von neuronalen Netzwerkgewichten, (ii) eine Mehrzahl von neuronalen Netzwerkschichten, die eine Mehrzahl von schichtweisen neuronalen Netzwerkoperationen umfassen, und (iii) eine Mehrzahl von Aktivierungsfunktionen in einer Aktivierungsschicht des NN umfasst;

Umwandeln des NN in eine logarithmische Domäne, um ein logarithmisches neuronales Netzwerk unter Verwendung einer auf Bitmanipulation basierenden logarithmischen Zahlensystem- (Bit Manipulation based Logarithmic Number System), BMLNS-, Technik zu erhalten, wobei der Schritt des Umwandelns umfasst,

Umwandeln der Mehrzahl von neuronalen Netzwerkgewichten des NN in die logarithmische Domäne, um eine Mehrzahl von logarithmischen neuronalen Netzwerkgewichten unter Verwendung der BMLNS-Technik zu erhalten;

Umwandeln der Mehrzahl von neuronalen Netzwerkschichten und der Mehrzahl von Aktivierungsfunktionen in die logarithmische Domäne, um eine Mehrzahl von logarithmischen neuronalen Netzwerkschichten und eine Mehrzahl von logarithmischen Aktivierungsfunktionen unter Verwendung der BMLNS-Technik zu erhalten, wobei die BMLNS-Technik an einer realen Zahl(x) bezeichnet wird durch:

Berechnen von zwei oder mehr Zwischenwerten, wobei die zwei oder mehr Zwischenwerte dargestellt werden durch:

$$mag = \log(|x|)$$

$$Nummer = ((int(|mag| \times 2^n) \times 2 + Zeichen) \times 2 + istNull)$$

$$BMLNS = \begin{cases} Nummer, & wenn\ mag \geq 0 \\ -(Nummer), & ansonsten \end{cases},$$

wobei *Zeichen* das Vorzeichen der realen Zahl bezeichnet, *istNull* bezeichnet, dass die reale Zahl Null oder anders ist, *mag* die Größe einer logarithmischen Zahlensystemdarstellung der realen Zahl ist und n eine positive ganze Zahl ist, die in Echtzeit basierend auf der Granularität und Verteilung der Mehrzahl von neuronalen Netzwerkgewichten des vortrainierten NN-Modells entschieden wird, wobei Werte einer logarithmischen Zahl, der *Größe,* des *Vorzeichens* und von *istNull* in einer einzelnen ganzzahligen 32-Bit-Variablen unter Verwendung des auf Bitmanipulation basierenden logarithmischen Zahlensystems gespeichert werden; und

Durchführen einer NN-Inferenz mit Eingabedaten, um einen Satz von Ausgaben unter Verwendung des logarithmischen neuronalen Netzwerks zu erhalten, wobei die Eingabedaten unter Verwendung der BMLNS-Technik in die logarithmische Domäne umgewandelt werden, wobei die NN-Inferenz durch Umwandeln der schichtweisen Operationen des neuronalen Netzwerks unter Verwendung der Eingabedaten, die in die logarithmische Domäne umgewandelt werden, durchgeführt wird, wobei die Umwandlung umfasst: Umwandeln der Eingabedaten, des Gewichts und der Bias-Matrizen einer ersten Schicht in die logarithmische Domäne durch Umwandeln jedes Matrixelements in die ganzzahlige 32-Bit-Variable.

5. System (100) nach Anspruch 4, wobei die einzelne ganzzahlige 32-Bit-Variable der realen Zahl umfasst,

ein niedrigstwertiges Bit (Least Significant Bit), LSB, das bezeichnet, dass die reale Zahl Null oder eine von Null verschiedene Zahl ist;
ein Bit vor LSB, das das Vorzeichen der realen Zahl bezeichnet; und verbleibende Bits, die den ganzzahligen Wert der Größe der Logarithmusfunktion der realen Zahl bezeichnen.

6. System (100) nach Anspruch 4, wobei

die Mehrzahl von neuronalen Netzwerkschichten eine Eingabeschicht, eine dichte Schicht, eine Faltungsschicht, eine Max-Pooling-Schicht, eine Stapelnormalisierungsschicht, eine Aktivierungsschicht und eine Long-Short-Term-Memory-, LSTM-, Schicht umfasst, und
die Mehrzahl von Aktivierungsfunktionen eine argmax-Funktion, eine Rectified-Linear-Unit-, ReLU-, Funktion, eine Sigmoid- und eine tanh-Funktion umfasst.

7. Ein oder mehrere nichtflüchtige maschinenlesbare Informationsspeichermedien, die eine oder mehrere Anweisungen umfassen, die, wenn sie von einem oder mehreren Hardwareprozessoren ausgeführt werden, bewirken:

Empfangen eines vortrainierten neuronalen Netzwerk-, NN-, Modells, wobei das NN in einer realen Domäne vortrainiert ist, wobei das NN ferner (i) eine Mehrzahl von neuronalen Netzwerkgewichten, (ii) eine Mehrzahl von neuronalen Netzwerkschichten, die eine Mehrzahl von schichtweisen neuronalen Netzwerkoperationen umfassen, und (iii) eine Mehrzahl von Aktivierungsfunktionen in einer Aktivierungsschicht des NN umfasst;
Umwandeln des NN in eine logarithmische Domäne, um ein logarithmisches neuronales Netzwerk unter Verwendung einer auf Bitmanipulation basierenden logarithmischen Zahlensystem- (Bit Manipulation based Logarithmic Number System), BMLNS-, Technik zu erhalten, wobei der Schritt des Umwandelns umfasst,

Umwandeln der Mehrzahl von neuronalen Netzwerkgewichten des NN in die logarithmische Domäne, um eine Mehrzahl von logarithmischen neuronalen Netzwerkgewichten unter Verwendung der BMLNS-Technik zu erhalten;
Umwandeln der Mehrzahl von neuronalen Netzwerkschichten und der Mehrzahl von Aktivierungsfunktionen in die logarithmische Domäne, um eine Mehrzahl von logarithmischen neuronalen Netzwerkschichten und eine Mehrzahl von logarithmischen Aktivierungsfunktionen unter Verwendung der BMLNS-Technik zu erhalten, wobei die BMLNS-Technik an einer realen Zahl(x) bezeichnet wird durch:

Berechnen von zwei oder mehr Zwischenwerten, wobei die zwei oder mehr Zwischenwerte dargestellt werden durch:

$$mag = \log(|x|)$$

$$Nummer = ((int(|mag| \times 2^n) \times 2 + Zeichen) \times 2 + istNull)$$

$$BMLNS = \begin{cases} Nummer, & wenn\ mag \geq 0 \\ -(Nummer), & ansonsten \end{cases},$$

wobei *Zeichen* das Vorzeichen der realen Zahl bezeichnet, *istNull* bezeichnet, dass die reale Zahl Null oder anders ist, *mag* die Größe einer logarithmischen Zahlensystemdarstellung der realen Zahl ist und n eine positive ganze Zahl ist, die in Echtzeit basierend auf der Granularität und Verteilung der Mehrzahl von neuronalen Netzwerkgewichten des vortrainierten NN-Modells entschieden wird, wobei Werte einer logarithmischen Zahl, der *Größe,* des *Vorzeichens* und von *istNull* in einer einzelnen ganzzahligen 32-Bit-Variablen unter

Verwendung des auf Bitmanipulation basierenden logarithmischen Zahlensystems gespeichert werden;

und

Durchführen einer NN-Inferenz mit Eingabedaten, um einen Satz von Ausgaben unter Verwendung des logarithmischen neuronalen Netzwerks zu erhalten, wobei die Eingabedaten unter Verwendung der BMLNS-Technik in die logarithmische Domäne umgewandelt werden, wobei die NN-Inferenz durch Umwandeln der schichtweisen Operationen des neuronalen Netzwerks unter Verwendung der Eingabedaten, die in die logarithmische Domäne umgewandelt werden, durchgeführt wird, wobei die Umwandlung umfasst:

Umwandeln der Eingabedaten, des Gewichts und der Bias-Matrizen einer ersten Schicht in die logarithmische Domäne durch Umwandeln jedes Matrixelements in die ganzzahlige 32-Bit-Variable.

## Revendications

1. Procédé mis en œuvre par processeur (300) comprenant :

la réception (302), via un ou plusieurs processeurs matériels (102), d'un modèle de réseau neuronal, NN, pré-entraîné, dans lequel le NN est pré-entraîné dans un domaine réel, dans lequel le NN comprend (i) une pluralité de poids de réseau neuronal, (ii) une pluralité de couches de réseau neuronal comprenant une pluralité d'opérations de réseau neuronal par couche et (iii) une pluralité de fonctions d'activation dans une couche d'activation du NN ;

la conversion (304), via les un ou plusieurs processeurs matériels (102), du NN en un domaine logarithmique pour obtenir un réseau neuronal logarithmique à l'aide d'une technique de système de nombres logarithmiques à base de manipulation de bits, BMLNS,

dans lequel l'étape de conversion comprend :

la conversion (304a) de la pluralité de poids de réseau neuronal du NN en domaine logarithmique pour obtenir une pluralité de poids de réseau neuronal logarithmique à l'aide de la technique BMLNS ;

la conversion (304b) de la pluralité de couches de réseau neuronal et de la pluralité de fonctions d'activation en domaine logarithmique pour obtenir une pluralité de couches de réseau neuronal logarithmique et une pluralité de fonctions d'activation logarithmique à l'aide de la technique BMLNS, dans lequel la technique BMLNS sur un nombre réel(*x*) est dénotée par :

le calcul de deux valeurs intermédiaires ou plus, dans lequel les deux valeurs intermédiaires ou plus sont représentées par :

$$mag = \log(|x|)$$

$$number = ((int(|mag| \times 2^n) \times 2 + sign) \times 2 + iszero)$$

$$BMLNS = \begin{cases} number, & if\ mag \geq 0 \\ -(number), & otherwise \end{cases}'$$

dans lequel *sign* dénote le signe du nombre réel, *iszero* dénote que le nombre réel est zéro ou autrement, *mag* est l'amplitude d'une représentation de système de nombres logarithmiques du nombre réel et n est un entier positif qui est décidé en temps réel sur la base de la granularité et de la distribution de la pluralité de poids de réseau neuronal du modèle de NN pré-entraîné, dans lequel des valeurs d'un nombre logarithmique, l'*amplitude,* le *signe* et iszéro sont stockés dans une variable entière de 32 bits unique à l'aide du système de nombres logarithmiques à base de manipulation de bits ; et

la réalisation (306), via les un ou plusieurs processeurs matériels (102), d'une inférence de NN avec des données d'entrée pour obtenir un ensemble de sortie à l'aide du réseau neuronal logarithmique dans lequel les données d'entrée sont converties en domaine logarithmique à l'aide de la technique BMLNS, dans lequel l'inférence de NN est réalisée en convertissant les opérations de réseau neuronal par couche à l'aide des données d'entrée qui sont converties en domaine logarithmique, dans lequel la conversion comprend :

la conversion des données d'entrée, des matrices de poids et de polarisation d'une première couche en domaine logarithmique en convertissant chaque élément de matrice en la variable entière de 32 bits.

2. Procédé (300) selon la revendication 1, dans lequel l'entier de 32 bits unique du nombre réel comprend :

un bit de poids faible, LSB, dénotant que le nombre réel est zéro ou un nombre non nul ; un bit avant LSB dénotant le signe du nombre réel ; et des bits restants dénotant une valeur entière de l'amplitude d'une fonction logarithmique du nombre réel.

3. Procédé (300) selon la revendication 1, dans lequel

la pluralité de couches de réseau neuronal inclut une couche d'entrée, une couche dense, une couche de convolution, une couche de regroupement de max, une couche de normalisation par lots, une couche d'activation et une couche de mémoire à long et court terme, LSTM, et la pluralité de fonctions d'activation inclut une fonction argmax, une fonction d'unité linéaire rectifiée, ReLU, une fonction sigmoïde et une fonction tanh.

4. Système (100), comprenant :

une mémoire (104) stockant des instructions ; une ou plusieurs interfaces de communication (106) ; et un ou plusieurs processeurs matériels (102) couplés à la mémoire (104) via les une ou plusieurs interfaces de communication (106), dans lequel les un ou plusieurs processeurs matériels (102) sont configurés par les instructions pour :

recevoir un modèle de réseau neuronal, NN, pré-entraîné, dans lequel le NN est pré-entraîné dans un domaine réel, dans lequel le NN comprend (i) une pluralité de poids de réseau neuronal, (ii) une pluralité de couches de réseau neuronal comprenant une pluralité d'opérations de réseau neuronal par couche et (iii) une pluralité de fonctions d'activation dans une couche d'activation du NN ; convertir le NN en un domaine logarithmique pour obtenir un réseau neuronal logarithmique à l'aide d'une technique de système de nombres logarithmiques à base de manipulation de bits, BMLNS, dans lequel l'étape de conversion comprend :

la conversion de la pluralité de poids de réseau neuronal du NN en domaine logarithmique pour obtenir une pluralité de poids de réseau neuronal logarithmique à l'aide de la technique BMLNS ; la conversion de la pluralité de couches de réseau neuronal et de la pluralité de fonctions d'activation en domaine logarithmique pour obtenir une pluralité de couches de réseau neuronal logarithmique et une pluralité de fonctions d'activation logarithmique à l'aide de la technique BMLNS, dans lequel la technique BMLNS sur un nombre réel(x) est dénotée par :

le calcul de deux valeurs intermédiaires ou plus, dans lequel les deux valeurs intermédiaires ou plus sont représentées par :

$$mag = \log(|x|)$$

$$number = ((int(|mag| \times 2^n) \times 2 + sign) \times 2 + iszero)$$

$$BMLNS = \begin{cases} number, & if\ mag \geq 0 \\ -(number), & otherwise \end{cases}$$

dans lequel *sign* dénote le signe du nombre réel, *iszero* dénote que le nombre réel est zéro ou autrement, *mag* est l'amplitude d'une représentation de système de nombres logarithmiques du nombre réel et n est un entier positif qui est décidé en temps réel sur la base de la granularité et de la distribution de la pluralité de poids de réseau neuronal du modèle de NN pré-entraîné, dans lequel des valeurs d'un nombre logarithmique, *mag, sign* et iszero sont stockés dans une variable entière de 32 bits unique à l'aide du système de nombres logarithmiques à base de manipulation de bits ; et

réaliser une inférence de NN avec des données d'entrée pour obtenir un ensemble de sortie à l'aide du réseau neuronal logarithmique dans lequel les données d'entrée sont converties en domaine logarithmique à l'aide de la technique BMLNS, dans lequel l'inférence de NN est réalisée en convertissant les opérations de réseau neuronal par couche à l'aide des données d'entrée qui sont converties en domaine logarithmique, dans lequel la conversion comprend :

la conversion des données d'entrée, des matrices de poids et de polarisation d'une première couche en domaine logarithmique en convertissant chaque élément de matrice en la variable entière de 32 bits.

5. Système (100) selon la revendication 4, dans lequel l'entier de 32 bits unique du nombre réel comprend :

un bit de poids faible, LSB, dénotant que le nombre réel est zéro ou un nombre non nul ; un bit avant LSB dénotant le signe du nombre réel ; et des bits restants dénotant une valeur entière de l'amplitude d'une fonction logarithmique du nombre réel.

6. Système (100) selon la revendication 4, dans lequel

la pluralité de couches de réseau neuronal inclut une couche d'entrée, une couche dense, une couche de convolution, une couche de regroupement de max, une couche de normalisation par lots, une couche d'activation et une couche de mémoire à long et court terme, LSTM, et la pluralité de fonctions d'activation inclut une fonction argmax, une fonction d'unité linéaire rectifiée, ReLU, une fonction sigmoïde et une fonction tanh.

7. Un ou plusieurs supports de stockage d'informations lisibles par machine non transitoires comprenant une ou plusieurs instructions qui, lorsqu'elles sont exécutées par un ou plusieurs processeurs matériels, amènent :

la réception d'un modèle de réseau neuronal, NN, pré-entraîné, dans lequel le NN est pré-entraîné dans un domaine réel, dans lequel le NN comprend en outre (i) une pluralité de poids de réseau neuronal, (ii) une pluralité de couches de réseau neuronal comprenant une pluralité d'opérations de réseau neuronal par couche et (iii) une pluralité de fonctions d'activation dans une couche d'activation du NN ; la conversion du NN en un domaine logarithmique pour obtenir un réseau neuronal logarithmique à l'aide d'une technique de système de nombres logarithmiques à base de manipulation de bits, BMLNS, dans lequel l'étape de conversion comprend :

la conversion de la pluralité de poids de réseau neuronal du NN en domaine logarithmique pour obtenir une pluralité de poids de réseau neuronal logarithmique à l'aide de la technique BMLNS ; la conversion de la pluralité de couches de réseau neuronal et de la pluralité de fonctions d'activation en domaine logarithmique pour obtenir une pluralité de couches de réseau neuronal logarithmique et une pluralité de fonctions d'activation logarithmique à l'aide de la technique BMLNS, dans lequel la technique BMLNS sur un nombre réel(x) est dénotée par :

le calcul de deux valeurs intermédiaires ou plus, dans lequel les deux valeurs intermédiaires ou plus sont représentées par :

$$mag = \log(|x|)$$

$$number = ((int(|mag| \times 2^n) \times 2 + sign) \times 2 + iszero)$$

$$BMLNS = \begin{cases} number, & if\ mag \geq 0 \\ -(number), & otherwise \end{cases}$$

dans lequel *sign* dénote le signe du nombre réel, *iszero* dénote que le nombre réel est zéro ou autrement, *mag* est l'amplitude d'une représentation de système de nombres logarithmiques du nombre réel et n est un entier positif qui est décidé en temps réel sur la base de la granularité et de la distribution de la pluralité de poids de réseau neuronal du modèle de NN pré-entraîné, dans lequel des valeurs d'un nombre logarithmique, *mag, sign* et iszero sont stockés dans une variable entière de 32 bits unique à l'aide du système de nombres logarithmiques à base de manipulation de bits ;
et
la réalisation d'une inférence de NN avec des données d'entrée pour obtenir un ensemble de sortie à l'aide du réseau neuronal logarithmique dans lequel les données d'entrée sont converties en domaine logarithmique à l'aide de la technique BMLNS, dans lequel l'inférence de NN est réalisée en convertissant les opérations de réseau neuronal par couche à l'aide des données d'entrée qui sont converties en domaine logarithmique, dans lequel la conversion comprend :
la conversion des données d'entrée, des matrices de poids et de polarisation d'une première couche en domaine logarithmique en convertissant chaque élément de matrice en la variable entière de 32 bits.

SYSTEM **100**

HARDWARE PROCESSOR(S) **102**

MEMORY **104**

I/O INTERFACE(S) **106**

FIG. 1

**FIG. 2**

300

receiving a neural network (NN) comprising (i) a plurality of neural network weights, (ii) a plurality of neural network layers comprising a plurality of neural network layer-wise operations and (iii) a plurality of activation functions in an activation layer of the NN

302

converting the NN into logarithmic domain to obtain a logarithmic neural network using a bit manipulation based logarithmic number system (BMLNS) technique

304

converting the plurality of neural network weights of the NN into logarithmic domain to obtain a plurality of logarithmic neural network weights using BMLNS technique

304a

converting the plurality of neural network layers and the plurality of activation functions into logarithmic domain to obtain a plurality of logarithmic neural network layers and a plurality of logarithmic activation functions using BMLNS technique

304b

A

FIG. 3A

300

A

performing NN inference with an input data to obtain a set of output using the logarithmic neural network wherein the input data is converted into logarithmic domain using the BMLNS technique — 306

**FIG. 3B**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321007570

**Non-patent literature cited in the description**

- **CHRIST MAXIME et al.** *Low-precision logarithmic arithmetic for neural network accelerators*